# EUROPEAN PATENT APPLICATION

(11) **EP 0 610 632 A1**
(43) Date of publication of application: **17.08.1994**
(21) Application number: 93400341.9
(22) Date of filing: 11.02.1993
(51) Int. Cl.: C08G 61/02

(54) **Resinous copolymer**

(71) Applicant: DSM N.V., NL-6411 TE Heerlen (NL)
(72) Inventor: Salvetat, Jacques, F-78110 Le Vesinet (FR); Wind, Ronald, NL-8014 LK Zwolle (NL)
(74) Representative: Martin, Jean-Jacques

(57) **Abstract**

The present invention relates to a resinous copolymer containing at least one monomer compound from each of the groups of phenol compounds (I) and olefinically unsaturated non-acidic terpene compounds (II), characterized in that the copolymer also contains at least one monomer compound from the group of polyunsaturated olefin compounds (III).

## Description

The invention relates to a resinous copolymer containing at least one monomer compound from each of the groups of phenol compounds (I) and olefinically unsaturated non-acidic terpene compounds (II).

Resinous copolymers of this type, so-called terpene-phenolic resins, are disclosed by SU-A-1073249. Said terpene-phenolic resins are used, inter alia, in printing inks, coatings and glues.

A drawback of said terpene-phenolic resins is that they often have a relatively low melting point. The melting temperature is strongly dependent on the type of terpene compounds that is used. A further drawback is that terpene-phenolic resins are relatively insensitive to modification reactions. Owing to these drawbacks, terpene-phenolic resins are not very suitable for use in printing inks, for which a high melting point is desirable, particularly for rapid drying of the ink. In this application modifiability is desirable for adapting certain properties of the resinous copolymer to the desired properties of the printing ink such as, for example, the solution viscosity, the solubility and the pigment-wetting properties.

The object of the invention is to provide a resinous copolymer which has a higher melting point and a better modifiability than the known terpene-phenolic resins.

This object is achieved according to the invention in that the copolymer also contains at least one monomer compound from the group of polyunsaturated olefin compounds (III), the monomer compounds III forming from 1 to 70% by weight of the total of the monomer compounds II and III, and the monomer compounds II and III forming at least 50% by weight of the total of the monomer compound I, II and III.

Surprisingly, it has been found that the resinous copolymers according to the invention have higher melting points than the known terpene-phenolic resins (the term melting point here and hereinafter refers to the "ring and ball" softening point according to ASTM E28). It is surprising that a resinous copolymer which comprises monomer compound III in addition to monomer compounds I and II has a higher melting point than a - otherwise similar - resinous copolymer not containing any monomer compounds III, because it is known, for example from JA-4735000, that resinous copolymers which consist of monomer compounds I and III have an even much lower melting point than the above-mentioned terpene-phenolic resins consisting of monomer compounds I and II.

A further advantage of the resinous copolymers according to the invention compared with the known terpene-phenolic resins is that, in a certain application, in the resinous copolymer use can be made of terpene compounds II which would result in a too low melting point when used in the corresponding terpene-phenolic resin for this application. Terpene compounds that result in resins having a low melting point are generally more readily available and cheaper.

It has further been found that the modifiability of the resinous copolymers according to the invention is also very good.

The resinous copolymers according to the invention further have very good solubility in aromatic-free mineral oils and good wetting behaviour towards pigments, while they dry well. As a result of these properties, the resinous copolymers, without being limited thereto, are in particular very suitable for application in printing inks.

Resinous copolymers containing monomer compounds from the groups I, II and III are disclosed by US-4105610.

US-4105610 describes a reaction product of a diolefin polymer having a phenol and an olefinically unsaturated carboxylic acid, in which the diolefin polymer may, inter alia, be a copolymer of polyunsaturated diolefins with a minor quantity of a copolymerizable monomer, which monomer may, apart from a large number of other compounds, optionally also be a non-acidic terpene compound. The copolymers from US-4105610 have a lower melting point at a comparable molecular weight. US-4105610 does not teach that the resinous copolymers according to the invention, with a high content of non-acidic terpene compounds, have high melting points.

EP-A-210706 and NL-A-8502134 describe resinous copolymers for use in glues and coatings, which largely consist of vinyl aromatic monomer compounds with a minor quantity of other copolymerizable monomer compounds, selected from a large group which, inter alia, comprises monomer compounds I, II and III.

Said resinous copolymers have low solubility in aromatic-free mineral oils and dry poorly. A further important drawback of the resinous copolymers of NL-A-8502134 is that they are not modifiable. Both these references do not teach that a resinous copolymer with a composition according to the invention has a relatively high melting point.

Good results, i.e. higher melting points and better solubility in aromatic-free mineral oils, can be achieved if the monomer compounds III form 5 to 50% by weight of the monomer compounds II and III in the resinous copolymer according to the invention.

Good results are achieved if the resinous copolymer according to the invention contains 5-50% by weight of monomer compounds I, 15-80% by weight of monomer compounds II and 0.5-50% by weight of monomer compounds III, based on the total weight of the monomer compounds I, II and III.

Resinous copolymers of this type are suitable for use in printing inks, glues and coatings.

The resinous copolymer according to the invention preferably contains 10-40% by weight of monomer compounds I, 30-80% by weight of monomer compounds II and 5-30% by weight of monomer compounds III, based on the total weight of the monomer compounds I, II and III.

Exceedingly good results are achieved in particular when such resinous copolymers are used in printing inks.

A content of more than 10% by weight of phenol compounds I results in good pigment wetting and a good start of the polymerization reaction. If the content is over 40% by weight, lower melting points and lower solubility in aromatic-free solvents are achieved. A high content of at least 30% by weight of monomer compounds II is important for a high melting point, good solubility, even in aromatic-free solvents, and a high drying rate. In the most preferred case, the content of monomer compounds II is even greater than 40% by weight. Preferably, the resinous copolymer has at least 5% by weight of monomer compounds III, in order to achieve a higher melting point and good modifiability. Even more preferably, said content is at least 10% by weight. A resinous copolymer with a monomer compound III content in excess of 30% has lower solubility in aromatic-free mineral oils.

Suitable phenol compounds (I) are mono- or polyhydric, mono- or polynuclear, substituted or unsubstituted phenol compounds such as phenol, mono-, di- or trialkyl- or alkoxyphenols, the alkyl or alkoxy groups of which contain 1-12 carbon atoms, chlorinated phenols, thiophenols or mixtures of said phenol compounds. Preferably, phenol or an alkylphenol having 1-12 carbon atoms such as, preferably, butyl-, octyl- or nonylphenol is used.

Preferably, the olefinically unsaturated non-acidic terpene compounds (II) have 5 to 40, and more preferably 5 to 20, carbon atoms.

The monomer compounds II may be pure substances or mixtures of various olefinically unsaturated non-acidic terpene compounds.

It has been found that very good results are achieved if the monomer compounds II have a high content of cyclic olefinically unsaturated non-acidic terpene compounds. The monomer compounds II in the resinous copolymer preferably comprise at least 80% by weight, and more preferably at least 90% by weight, of cyclic olefinically unsaturated non-acidic terpene compounds.

Suitable olefinically unsaturated non-acidic terpene compounds, as the pure monomer compound II or as a component in a mixture of monomer compounds II are, for example, alpha-pinene, beta-pinene, sabinene, limonene, carene and dipentene. It has been found that very good results are achieved if the monomer compound II is alpha-pinene.

The mixtures used in practice may be industrial grades or concentrates which mainly comprise monomer compounds II. Said mixtures may be distillates or extracts of natural raw materials such as, for example, of natural resins. Good results can be achieved with turpentines. These are mixtures of alpha- and beta-pinene and other terpenes. Preferably, use is made of turpentines with a high alpha-pinene content.

The polyunsaturated olefin compounds (III) preferably have 4-20 carbon atoms. They must have one or more cationically polymerizable unsaturated bonds and one or more unsaturated bonds which can be polymerized non-cationically under the conditions of the polymerization reaction. As a result, the resinous copolymer is still partially unsaturated after the reaction of the monomer compounds I, II and III.

Polyunsaturated olefin compounds which can be used for this purpose are, in particular, cycloaliphatic dienes or trienes such as, inter alia, dicyclopentadiene (DCPD), cyclopentadiene, cyclooctadiene or cyclohexadiene or non-cyclic aliphatic dienes or trienes, whose double bonds are preferably conjugated, such as, inter alia, butadiene, piperylene or 1,3-octadiene. Preferably, doubly unsaturated olefin compounds are used.

The polyunsaturated olefin compounds (III) may be a pure substance or a mixture of various monomer compounds III.

Good results, in particular high melting points, can be achieved if in the resinous copolymer the monomer compounds III comprise at least 60% by weight, more preferably at least 80% by weight, of cyclic polyunsaturated olefin compounds.

Very good results are achieved if the cyclic polyunsaturated olefin compound is dicyclopentadiene.

Good results are achieved in particular if at least 80% by weight, or more preferably at least 90% by weight, of both the non-acidic terpene compounds (II) and the polyunsaturated olefin compounds (III) are cyclic compounds. In particular, said compounds are preferably alpha-pinene and dicyclopentadiene, respectively.

The resinous copolymer is prepared by cationic polymerization, a Lewis acid being used as the catalyst. Suitable catalysts are, inter alia, BF₃, BCl₃ and complexes of BF₃ with, for example, water, alkyl alcohols, phenols or ethers. The use of BF₃ is preferred, however.

There are various methods for preparing the resinous copolymer according to the invention. Thus, the monomer compounds may, for example, first be blended together, after which the catalyst is added in small amounts with stirring. This method is particularly usable if relatively small amounts of phenol compounds (I) have to be incorporated.

The resinous copolymer is preferably prepared according to a "reverse" cationic polymerization in a solvent. "Reverse" means that, in contrast to the method described above, an activated complex is first formed between the catalyst and the phenol compounds (I), after which the remaining monomer compounds are added. This method makes it possible to incorporate higher proportions of phenol compounds. A further advantage of this method is that, as a result of using a solvent, the reaction can proceed at lower temperatures.

The solvent may be an alkylating solvent or a solvent which is inert with regard to the polymerization reaction.

An alkylating solvent consists wholly or partially of aromatic substances which may be incorporated in small amounts into the resinous copolymer during the polymerization reaction. Suitable alkylating solvents are toluene, xylene, trimethylbenzene, which compounds may or may not be substituted by aliphatic molecules, or mixtures of such compounds with a compound which is inert with regard to the polymerization reaction. An advantage of aromatic-containing solvents is the better solubility of the reactants and the reaction products, as a result of which a more homogeneous reaction mixture is obtained. The aromatic alkylating compounds from the solvent which are incorporated in the resinous copolymer have a positive influence on the solubility of the resinous copolymer in aromatic-containing solvents.

Preferably, as solvent use is made of a compound or a mixture of compounds which is inert with regard to the polymerization reaction. Especially in conjunction with a low reaction temperature, this results in very high melting points being achieved and products being obtained which are readily soluble in aromatic-free mineral solvents. Suitable inert solvents include aliphatic compounds which may or may not be chlorinated. Preferably, use is made of an alkane. Preferably, these alkanes have 5 to 10 carbon atoms, and good results are achieved, in particular, with heptane. In many cases, in particular at a low reaction temperature, it is preferred to combine the advantages of both the alkylating solvents and the inert compounds by using a mixture of these as solvent. A further advantage of a "reverse" cationic polymerization in an inert solvent is that the copolymer composition is virtually completely stoichiometrically defined by the choice of the proportions of the monomers employed.

The reaction temperature is preferably below 60°C and more preferably below 40°C. The advantage of a low reaction temperature is that alkylating solvents can be used, even if good solubility in aromatic-free solvents is required, since with low reaction temperatures only small amounts of the alkylating compounds from the solvents are incorporated in the resinous copolymer.

In addition to the monomer compounds I, II and III, the resinous copolymers according to the invention optionally may also contain minor amounts, preferably 0.5-30% by weight, more preferably 0.5-15% by weight, and most preferably 0.5-5% by weight, of other non-acidic copolymerizable monomer compounds. These may, inter alia, be vinyl aromatics or alkenes. Said monomer compounds may be added before, during or after the polymerization reaction of the monomer compounds I, II and III. Especially for use in printing inks it is important, in order to obtain good solubility of the resin in the ink and effective drying of the ink, that the amount of vinyl aromatic compounds is less than 15% by weight and preferably less than 10% by weight, and more preferably less than 5% by weight.

After the polymerization reaction and neutralization of the catalyst, the resinous copolymer, by means of procedures known per se, is isolated from the reaction product and purified.

The resinous copolymers which exclusively comprise monomer compounds I, II and III and which optionally have a minor amount of the above-mentioned copolymerizable non-acidic monomer compounds (hereinafter referred to as base resin) have, in particular if prepared according to the preferred method outlined above, a high melting point even if the weight-average molecular weight is relatively low. Preferably, said base resin has a melting point of at least 100°C at a weight-average molecular weight of at most 1000, or more preferably a melting point of at least 120°C at a weight-average molecular weight of at most 1500, or yet more preferably a melting point of at least 130°C at a weight-average molecular weight of at most 1500.

Modification with other compounds makes it possible to adjust particular properties of the resinous copolymer to the requirements of particular applications.

The resinous copolymer based on monomer compounds I, II and III and optionally a minor amount of the above-mentioned copolymerizable non-acidic monomer compounds may have been modified further with at most 50% by weight, and more preferably at most 30% by weight (based on the total copolymer weight), of other compounds. The modification may take place before or after the above-mentioned reaction product is upgraded to yield the resinous copolymer.

As a result of modification, the melting point of the resinous copolymer may increase further. The weight-average molecular weight also increases concomitantly. The weight-average molecular weight is measured by means of Gel Permeation Chromatography (GPC) according to the SAM-5019 method.

The resinous copolymer according to the invention then consists of a skeleton of non-acidic monomer compounds I, II, III, which have been linked together in one polymerization step, and optionally a minor amount of copolymerizable non-acidic monomer compounds to which, in a second reaction step, other compounds such as, in particular, acidic monomer compounds have been attached. A resinous copolymer having such a structure must be distinguished from a resin in which all the monomer compounds, including the acidic monomer compounds, have been linked together in a single step as a mixture.

The structure of the resinous copolymer according to the invention has the advantage, compared to such a structure, that improved properties of the skeleton and the functional properties of the modifications are both obtained at the same time, without these affecting each other adversely. Thus, a resinous copolymer which is composed of a skeleton of the above-mentioned monomer compounds, which has been modified with other compounds, will have a higher melting point than a copolymer with the same monomer composition, in which the monomer compounds occur in mixed form in the copolymer.

The resinous copolymer may, for example, have been modified with an unsaturated carboxylic acid, such as unsaturated monocarboxylic acids, unsaturated dicarboxylic acids, or unsaturated carboxylic acid anhydrides. A carboxylic acid anhydride is preferably used in this context. Particularly good results are achieved with maleic anhydride.

In another embodiment of the invention the carboxylic acid groups of the above-mentioned modified resinous copolymer are also wholly or partially esterified with alcohols, and/or modified by salt formation

In yet another embodiment of the invention the resinous copolymer, which may or may not have been modified in the above-mentioned way, is further modified by condensation with formaldehyde or with a precondensed phenol-formaldehyde resin.

Resinous copolymers according to the invention are excellently suitable for application in printing inks. Printing inks which contain a resinous copolymer according to the invention, pigments and, if required, other additives, have a high melting point, good wetting behaviour with regard to pigments, good solubility even in aromatic-free solvents, good oxidation resistance and a high drying rate.

Said resinous copolymers to be used in printing inks preferably have a melting point of at least 120°C, preferably at least 130°C, and more preferably of at least 140°C. The solubility is expressed by the cloud point. This is the maximum temperature at which, at a certain content, the resinous copolymer is still just soluble in a solvent. A low cloud point corresponds to good solubility. The base resin preferably has a cloud point, at a content of 10 % by weight in an aromatic-free mineral oil (Haltermann PKWF 6/9 AF), of at most 100°C, and more preferably of at most 75°C.

The cloud point measurements are carried out using a DSM Chemotronic cloud point meter, 10% by weight of a solution of the resinous copolymer being heated to 230°C and then gradually being cooled down. At the temperature at which the resin is just no longer soluble, the solution becomes cloudy and the trajectory of an IR beam is interrupted thereby.

The invention will hereinafter be explained in more detail by reference to several examples.

### Example I

In a double-walled, cooled 1.5 l reactor equipped with stirrer, reflux condenser, thermocouple and gas inlet tube, 520 g of toluene and 200 g of phenol were successively combined. The solution was heated to 35°C, the phenol being dissolved during stirring. After all phenol had dissolved, BF₃ gas was fed at a rate of 40 ml a minute, so that a BF₃-phenol complex was formed. After the phenol solution was saturated with BF₃ (approx. 2500 ml = 7.5 g of BF₃), the BF₃ feed was stopped.

Subsequently, a monomer mixture of 444 g of α-pinene (>95% pure) and 137.2 g of dicyclopentadiene (95% pure) was fed to the complex formed, the feeding rate being such that the average polymerization temperature was 35°C. After addition of the entire monomer mixture, stirring took place for 60 minutes at 35°C. The BF₃ was neutralized through addition of 26 g of Ca(OH)₂ at 90°C. After filtration, the resin was freed of solvent, oligomers and non-converted monomers by means of vacuum distillation and passing through of nitrogen.

In this way 663 g of resin was obtained which had the following properties: R&B melting point = 146°C, Mw (with regard to polystyrene) = 1100, Mn (with regard to polystyrene) = 680, cloud point (10%) in aromatic-free mineral oil (Haltermann PKWF 6/9AF) = 60°C.

### Example II

Example I was repeated with a different composition of the monomer mixture. In this example a monomer mixture of 238 g of α-pinene (>95% pure) and 297 g of dicyclopentadiene (95% pure) was added to the BF₃-phenol complex.

In this way 702 g of resin was obtained which had the following properties: R&B melting point = 148°C, Mw (with regard to polystyrene) = 1135, Mn (with regard to polystyrene) = 620, cloud point (10%) in aromatic-free mineral oil (Haltermann PKWF 6/9AF) = 84°C.

Comparison of examples I and II shows that the solubility in aromatic-free mineral oil decreases when the content of monomer compounds III exceeds 30%.

### Comparative experiment A

Example I was repeated with a different composition of the monomer mixture. In this example 574 g of dicyclopentadiene was added to the BF₃-phenol complex.

In this way a resin was obtained which had the following properties: R&B melting point = < 20°C, Mw (with regard to polystyrene) = 280, Mn (with regard to polystyrene) = 210, cloud point (10%) in aromatic-free mineral oil (Haltermann PKWF 6/9AF) = <20°C.

Comparative experiment A shows that a resinous copolymer consisting of monomer compounds I and III has a very low melting point.

### Comparative experiment B

Example I was repeated with a different composition of the monomer mixture. In this example 581 g of α-pinene (>95% pure) was added to the BF₃-phenol complex.

In this way a resin was obtained which had the following properties: R&B melting point = 110°C, Mw (with regard to polystyrene) = 800, Mn (with regard to polystyrene) = 590, cloud point (10%) in aromatic-free mineral oil (Haltermann PKWF 6/9AF) = <41°C.

Comparative experiment B shows that a resinous copolymer consisting of monomer compounds I and III has a lower melting point than the resinous copolymer according to the invention in example I.

### Example III

Example I was repeated with a different composition of the monomer mixture. In this example a monomer mixture of 444 g of turpentine (consisting of 84% of α-pinene, 12% of β-pinene, 2% of δ-limonene) and 137.2 g of dicyclopentadiene (95% pure) was added to the BF₃-phenol complex.

In this way 585 g of resin was obtained which had the following properties: R&B melting point = 111°C, Mw (with regard to polystyrene) = 745, Mn (with regard to polystyrene) = 550, cloud point (10%) in aromatic-free mineral oil (Haltermann PKWF 6/9AF) = 50°C.

Example III shows that the melting point lowers if use is made of turpentine in place of α-pinene as terpene compounds II. However, the melting point is comparable to that of the terpene-phenolic resin of comparative experiment B on the basis of pure α-pinene. Turpentine is more readily available and cheaper than pure α-pinene.

### Comparative experiment C

Example III was repeated with a different composition of the monomer mixture. In this example 581 g of turpentine (consisting of 84% of α-pinene, 12% of β-pinene, 2% of δ-limonene) was added to the BF₃-phenol complex.

In this way 623 g of resin was obtained which had the following properties: R&B melting point = 76°C, Mw (with regard to polystyrene) = 550, Mn (with regard to polystyrene) = 370, cloud point (10%) in aromatic-free mineral oil (Haltermann PKWF 6/9AF) = 47°C.

Comparative experiment C shows that the melting point of a phenol-terpene resin on the basis of turpentine is very much lower than that of the corresponding resinous copolymer according to the invention from example III.

### Example IV

Example I was repeated with a different composition of the monomer mixture. In this example a monomer mixture of 444 g of α-pinene (>95% pure) and 141 g of 50% pure piperylene was added to the BF₃-phenol complex.

In this way 677 g of resin was obtained which had the following properties: R&B melting point = 114°C, Mw (with regard to polystyrene) = 920, Mn (with regard to polystyrene) = 650, cloud point (10%) in aromatic-free mineral oil (Haltermann PKWF 6/9AF) = <20°C.

In comparison with example I, this example shows that when use is made of a cyclic monomer compound III such as dicyclopentadiene the melting point obtained is higher than when use is made of a linear monomer compound III such as piperylene. On the other hand a somewhat higher melting point and a higher solubility is obtained compared to comparative experiment B.

### Comparative experiment D

Example I was repeated with a different composition of the monomer mixture. In this example a monomer mixture of 683.1 g of C₉ cracker fraction (60-65% cationically polymerizable) and 137.2 g of dicyclopentadiene (95% pure) was added to the BF₃-phenol complex.

In this way 724 g of resin was obtained which had the following properties: R&B melting point = 59°C, Mw (with regard to polystyrene) = 590, Mn (with regard to polystyrene) = 400, cloud point (10%) in aromatic-free mineral oil (Haltermann PKWF 6/9AF) = 89°C.

The C₉ cracker fraction predominantly consists of aromatic compounds such as indene, vinyl toluene, (methyl)styrene, etc.

Comparative experiment D shows that when use is made of a C₉ fraction in place of the monomer compounds II a very low melting point and very low solubility are obtained in comparison with the resinous copolymer according to the invention.

### Example V

Example I was repeated with a different composition of the monomer mixture. In this example a monomer mixture of 222 g of α-pinene (>95% pure), 341 g of C₉ cracker fraction (60-65% cationically polymerizable) and 137.2 g of dicyclopentadiene (95% pure) was added to the BF₃-phenol complex.

In this way 714 g of resin was obtained which had the following properties: R&B melting point = 116°C, Mw (with regard to polystyrene) = 1050, Mn (with regard to polystyrene) = 595, cloud point (10%) in aromatic-free mineral oil (Haltermann PKWF 6/9AF) = 109°C.

Since only a part (65%) of the C₉ fraction is cationically polymerizable, the resinous copolymer contains about 38% by weight of these compounds. Example V shows that the melting point had improved substantially compared with the corresponding resin from comparative experiment D. However, the solubility is not optimal. The same conclusion holds for example VI.

### Example VI

Example V was repeated, the C₉ cracker fraction being replaced by 222 g of para-methylstyrene (99% pure).

In this way 716 g of resin was obtained which had the following properties: R&B melting point = 119°C, Mw (with regard to polystyrene) = 1415, Mn (with regard to polystyrene) = 700, cloud point (10%) in aromatic-free mineral oil (Haltermann PKWF 6/9AF) = 122°C.

### Example VII

Example VI was repeated with different amounts of α-pinene and para-methylstyrene. In this example use was made of 365.9 of α-pinene (>95% pure) and 78.1 g of para-methylstyrene (99% pure).

In this way 668 g of resin was obtained which had the following properties: R&B melting point = 145°C, Mw (with regard to polystyrene) = 1110, Mn (with regard to polystyrene) = 700, cloud point (10%) in aromatic-free mineral oil (Haltermann PKWF 6/9AF) = 67°C.

In comparison with example VI, example VII shows that a higher melting point as well as better solubility can be achieved if the content of vinyl aromatic compounds, such as para-methylstyrene here, is low.

### Example VIII

Example I was repeated with a different solvent. In this example methylcyclohexane was used as solvent.

In this way 616 g of resin was obtained which had the following properties: R&B melting point = 158°C, Mw (with regard to polystyrene) = 1320, Mn (with regard to polystyrene) = 760, cloud point (10%) in aromatic-free mineral oil (Haltermann PKWF 6/9AF) = 47°C.

Example VIII shows that both a higher melting point and better solubility are obtained when use is made of a solvent that was inert with regard to the polymerization reaction.

### Example IX

Example I was repeated with a different solvent. In this example a mixture of 80 parts by weight of heptane and 20 parts by weight of toluene was used as solvent.

In this way 638 g of resin was obtained which had the following properties: R&B melting point = 173°C, Mw (with regard to polystyrene) = 1430, Mn (with regard to polystyrene) = 820, cloud point (10%) in aromatic-free mineral oil (Haltermann PKWF 6/9AF) = 52°C.

Example IX shows that higher melting points can be obtained in combination with a very small decrease in solubility when use is made of a mixture of an inert and an alkylating mixture as solvent (because of the low reaction temperature).

### Example X

Example I was repeated at a different polymerization temperature. In this example the polymerization temperature was 60°C.

In this way 649 g of resin was obtained which had the following properties: R&B melting point = 140°C, Mw (with regard to polystyrene) = 1320, Mn (with regard to polystyrene) = 650, cloud point (10%) in aromatic-free mineral oil (Haltermann PKWF 6/9AF) = 124°C.

Example X shows that a higher reaction temperature in an alkylating solvent (toluene) leads to a decrease in solubility.

### Example XI

In a 2 l reactor equipped with stirrer, reflux condenser, thermocouple, inert gas inlet tube and heating jacket, 400 g of the resin from example I was melted and heated to 220°C under nitrogen. Subsequently, 56 g of a nonyl phenol formaldehyde adduct was added in 1 hour. The reaction mixture was then stirred for another hour, following which non-reacted materials were removed by means of vacuum distillation while nitrogen was being passed through.

In this way a resin was obtained which had the following properties: R&B melting point = 176°C, Mw (with regard to polystyrene) = 3750, Mn (with regard to polystyrene) = 1030, cloud point (10%) in aromatic-free mineral oil (Haltermann PKWF 6/9AF) = 63°C, viscosity (50%) in aliphatic mineral oil (Haltermann PKWF 6/9AFN) at 23°C = 610 dPa.s.

Example XI shows that modification of the resinous copolymer of Example I results in, inter alia, a higher melting point and an increase in viscosity, which is desirable for application in printing inks.

### Comparative experiment E

Example XI was repeated using a different resin. In this example use was made of the resin from comparative experiment B.

In this way a resin was obtained which had the following properties: R&B melting point = 171°C, Mw (with regard to polystyrene) = 2875, Mn (with regard to polystyrene) = 950, cloud point (10%) in aromatic-free mineral oil (Haltermann PKWF 6/9AF) = 30°C, viscosity (50%) in aliphatic mineral oil (Haltermann PKWF 6/9AFN) at 23°C = 165 dPa.s.

Comparative experiment E shows that the modifiability of the phenol-terpene resin from comparative experiment B is poor. The viscosity of this resin is much lower than that of the resinous copolymer from example I.

### Example XII

In the reactor described in example XI, 400 g of the resin from example I was melted and heated to 200°C. Subsequently, 10 g of maleic anhydride was added, followed by stirring for 2 hours at 200°C. Then, successively, 40 g of epoxidized linseed oil was added, heated to 230°C and in one hour 80 g of a nonylphenol-formaldehyde adduct was added. This was followed by stirring for 1 hour. The non-reacted components were removed by means of vacuum distillation while nitrogen was being passed through.

In this way a resin was obtained which had the following properties: R&B melting point = 186°C, Mw (with regard to polystyrene) = 47100, Mn (with regard to polystyrene) = 1300, cloud point (10%) in aromatic-free mineral oil (Haltermann PKWF 6/9AF) = 164°C, viscosity (35%) in aliphatic mineral oil (Haltermann PKWF 6/9AFN) at 23°C = 1300 dPa.s.

### Example XIII

In the reactor described in example XI, 400 g of the resin from example I with 100 g of xylene was heated to 145°C. After all resin had dissolved, 20 g of maleic anhydride was added, followed by stirring for 5 minutes. In 30 minutes a 50% solution of di-tertiary butyl peroxide in xylene was added, which was followed by stirring for 120 minutes. The temperature was raised to 200°C, followed by stirring for 120 minutes. The non-reacted components were removed by means of vacuum distillation while nitrogen was being passed through.

In this way a resin was obtained which had the following properties: R&B melting point = 168°C, acid number = 13 mg KOH/g resin.

### Comparative experiment F

Experiment XIII was repeated, use being made of a different resin. In this example the resin from comparative experiment B was used.

In this way a resin was obtained which had the following properties: R&B melting point = 164°C, acid number = 7 mg KOH/g resin.

Comparison of comparative experiment F and example XIII shows that the resinous copolymer according to the invention is better modifiable. This is apparent from the fact that the acid number in example XIII is almost two times higher, which implies that the amount of maleic anhydride incorporated is almost twice as high.

### Example XIV

In the reactor described in example XI, 670 g of the resin from example I was dissolved at 145°C in 75 g of xylene. Subsequently 213 g of colophony, 50 g of tall-oil fatty acid and 4 g of zinc oxide were added. The solution was cooled down to 100°C. At 100°C 41.1 g of para-formaldehyde was added and the reaction temperature was raised to 125°C in 10 minutes. After stirring for 2 hours at 125°C, the reaction temperature was raised to 230°C in 3 hours. At 230°C 0.9 g of magnesium oxide was added, followed by stirring for 4 hours. The unreacted components were removed by means of vacuum distillation while nitrogen was being passed through.

In this way a resin was obtained which had the following properties: R&B melting point = 196°C, viscosity in toluene at 23°C = 5.5 dPa.s.

## Claims

1. Resinous copolymer containing at least one monomer compound from each of the groups of phenol compounds (I) and olefinically unsaturated non-acidic terpene compounds (II), characterized in that the copolymer also contains at least one monomer compound from the group of polyunsaturated olefin compounds (III), the monomer compounds III forming 1 to 70% by weight of the total of the monomer compounds II and III, and the monomer compounds II and III forming at least 50% by weight of the total of the monomer compounds I, II and III.

2. Resinous copolymer according to claim 1, characterized in that the monomer compounds III form 5 to 50% by weight of the monomer compounds II and III.

3. Resinous copolymer according to either of claims 1 or 2, characterized in that the copolymer contains 10-40% by weight of monomer compounds I, 30-80% by weight of monomer compounds II and 5-30% by weight of monomer compounds III, based on the total weight of the monomer compounds I, II and III.

4. Resinous copolymer according to claims 1-3, characterized in that the monomer compounds II comprise at least 80% by weight of cyclic olefinically unsaturated non-acidic terpene compounds.

5. Resinous copolymer according to claim 4, characterized in that the cyclic terpene compound is alpha-pinene.

6. Resinous copolymer according to claims 1-5, characterized in that the monomer compounds (III) comprise at least 80% by weight of cyclic polyunsaturated olefin compounds.

7. Resinous copolymer according to claim 6, characterized in that the cyclic polyunsaturated olefin compound is dicyclopentadiene.

8. Resinous copolymer according to any one of claims 1-7, characterized in that the copolymer contains at most 15% by weight of vinyl aromatic monomer compounds.

9. Resinous copolymer obtainable by reacting, in the presence of a Lewis acid as catalyst, of a mixture containing at least one monomer compound from each of the groups of phenol compounds (I), olefinically unsaturated non-acidic terpene compounds (II) and polyunsaturated olefin compounds (III), the monomer compounds III forming 1 to 70% by weight of the total of the monomer compounds II and III, and the monomer compounds II and III forming at least 50% by weight of the total of the monomer compounds I, II and III.

10. Method for the preparation of a resinous copolymer according to any one of claims 1-9, the monomer compounds (I) being activated in a solvent with a Lewis acid, after which the other monomer compounds are added.

11. Method according to claim 10, characterized in that the solvent is essentially inert with regard to the polymerization reaction.

12. Method according to claims 10 or 11, characterized in that the polymerization reaction takes place at a temperature below 50°C.

13. Resinous copolymer obtainable according to the method according to any one of claims 10 to 12.

14. Modified copolymer containing a resinous copolymer according to any one of claims 1-9 or 13 and at most 50% by weight, based on the total weight of the copolymer, of other compounds.

15. Modified copolymer according to claim 14, characterized in that the copolymer has been modified with an unsaturated carboxylic acid selected from the group of unsaturated monocarboxylic acids, unsaturated dicarboxylic acids or unsaturated carboxylic acid anhydrides.

16. Modified copolymer according to claim 15, characterized in that the carboxylic acid groups have been wholly or partly esterified with alcohols and/or have been modified by salt formation.

17. Modified copolymer according to any one of claims 14-16, characterized in that the copolymer has been modified with formaldehyde.

18. Modified copolymer according to any one of claims 14-16, characterized in that the copolymer has been modified with precondensed phenol-formaldehyde resin.

19. Printing inks comprising a resinous copolymer according to any one of claims 1-9 or 13 or a modified copolymer according to any one of claims 14-18, pigments and, if required, other additives.
